# EUROPEAN PATENT APPLICATION

(11) **EP 4 697 613 A1**
(43) Date of publication of application: **18.02.2026**
(21) Application number: 25179358.4
(22) Date of filing: 28.05.2025
(51) Int. Cl.: H04B 5/77, G06K 7/10, G06K 19/07

(54) **NEAR FIELD COMMUNICATION METHODS AND DEVICES**

(30) Priority: 13.08.2024 CN 202411107032
(71) Applicant: Advanced Nova Technologies (Singapore) Holding Pte. Ltd., Singapore 189773 (SG)
(72) Inventor: ZHENG, Weijun, Hangzhou, 310000 (CN); DAI, Yuhua, Hangzhou, 310000 (CN); WANG, Yujie, Hangzhou, 310000 (CN); SONG, Yang, Hangzhou, 310000 (CN); ZHANG, Senyan, Hangzhou, 310000 (CN)
(74) Representative: Winter, Brandl - Partnerschaft mbB

(57) **Abstract**

One or more embodiments of this specification provide near field communication methods and devices. The near field communication device can detect a probing signal transmitted by a card reader device in a low power card detection mode; and transmit a disturbance signal when detecting that a transmission status of the first probing signal satisfies a condition for signal interference superposition, so that interference superposition is performed between the disturbance signal and the first probing signal, and then the card reader device is triggered to exit the low power card detection mode.

## Description

### TECHNICAL FIELD

One or more embodiments of this specification relate to the field of near field communication technologies, and in particular, to near field communication methods and devices.

### BACKGROUND

Near field communication (NFC) is a short-distance wireless communication technology, and can implement contactless data transmission between two devices within a short distance, providing a secure and convenient communication method for an electronic device.

In an NFC application scenario in which a terminal device such as a mobile phone is used as a card reader, tag information of an NFC tag can be read by using the mobile phone. If repeated attempts are needed to successfully read the tag information in a process in which the mobile phone reads the tag information, user experience is seriously affected. Therefore, a solution that can increase a success rate of reading the tag information by the mobile phone needs to be provided.

### SUMMARY

To increase a success rate of reading tag information by a mobile phone, one or more embodiments of this specification provide near field communication methods and devices.

According to a first aspect, one or more embodiments of this specification provide a near field communication method, applied to a near field communication device. The method includes: detecting a probing signal transmitted by a card reader device in a low power card detection mode; and transmitting a disturbance signal when it is detected that a transmission status of a first probing signal satisfies a condition for signal interference superposition, so that interference superposition is performed between the disturbance signal and the first probing signal, and then the card reader device is triggered to exit the low power card detection mode, where the first probing signal is a probing signal first detected by the near field communication device in probing signals transmitted by the card reader device in the low power card detection mode.

In a possible implementation, the detecting a probing signal transmitted by a card reader device in a low power card detection mode includes: determining whether first feature information is detected, where the first feature information is feature information of the probing signal transmitted by the card reader device in the low power card detection mode; when determining that the first feature information is detected, determining that the first probing signal is detected; monitoring a rising edge transition event based on a level of the first probing signal; and when the rising edge transition event is monitored, determining that it is detected that the transmission status of the first probing signal satisfies the condition for signal interference superposition.

In a possible implementation, the transmitting a disturbance signal when it is detected that a transmission status of a first probing signal satisfies a condition for signal interference superposition includes: determining a target disturbance signal parameter when it is detected that the transmission status of the first probing signal satisfies the condition for signal interference superposition; generating the disturbance signal based on the target disturbance signal parameter; and transmitting the disturbance signal.

In a possible implementation, the determining a target disturbance signal parameter when it is detected that the transmission status of the first probing signal satisfies the condition for signal interference superposition includes: when it is detected that the transmission status of the first probing signal satisfies the condition for signal interference superposition, determining a first device model corresponding to the card reader device; obtaining configuration information of the disturbance signal, where the configuration information includes at least one second device model and a disturbance signal parameter corresponding to each second device model; and determining a disturbance signal parameter corresponding to the first device model in the configuration information as the target disturbance signal parameter.

In a possible implementation, the target disturbance signal parameter includes a target amplitude, a target phase, target duration, and a target frequency; and the target phase is opposite to a phase of the first probing signal, and the target frequency is the same as a frequency of the first probing signal.

In a possible implementation, an amplitude variation between the first probing signal and an interference signal obtained after interference superposition is performed between the disturbance signal and the first probing signal is greater than a detection threshold of the card reader device for the amplitude variation; and/or a phase variation between the interference signal and the first probing signal is greater than a detection threshold of the card reader device for the phase variation.

In a possible implementation, the method further includes: when a card reading request signal is not received within predetermined duration after the disturbance signal is transmitted, detecting the probing signal transmitted by the card reader device in the low power card detection mode, where the card reading request signal is a signal transmitted by the card reader device in a standard card detection mode; and when a second probing signal is detected, transmitting an excitation signal after a transmission periodicity of the second probing signal, so that the card reader device is triggered to exit the low power card detection mode.

In a possible implementation, the method further includes: determining, within the predetermined duration after the disturbance signal is transmitted, whether second feature information is detected, where the second feature information is feature information of the card reading request signal transmitted by the card reader device in the standard card detection mode; and when it is determined that the second feature information is not detected, determining that the card reading request signal is not received.

According to a second aspect, one or more embodiments of this specification provide a near field communication device, including a signal processing module and a signal generation module. The signal processing module is configured to detect a probing signal transmitted by a card reader device in a low power card detection mode. The signal generation module is configured to generate and transmit a disturbance signal when it is detected that a transmission status of a first probing signal satisfies a condition for signal interference superposition, so that interference superposition is performed between the disturbance signal and the first probing signal, and then the card reader device is triggered to exit the low power card detection mode. The first probing signal is a probing signal first detected by the near field communication device in probing signals transmitted by the card reader device in the low power card detection mode.

In a possible implementation, the signal processing module includes an analog-to-digital converter and a processor. That the signal processing module is configured to detect a probing signal transmitted by a card reader device in a low power card detection mode is specifically as follows: the analog-to-digital converter is configured to convert a received electromagnetic field signal into a digital signal, and output the digital signal to the processor; and the processor is configured to determine, based on the digital signal, whether first feature information is detected, where the first feature information is feature information of the probing signal transmitted by the card reader device in the low power card detection mode; when determining that the first feature information is detected, determine that the first probing signal is detected; monitor a rising edge transition event based on a level of the first probing signal; and when the rising edge transition event is monitored, determine that it is detected that the transmission status of the first probing signal satisfies the condition for signal interference superposition.

In a possible implementation, the processor is further configured to determine a target disturbance signal parameter when it is detected that the transmission status of the first probing signal satisfies the condition for signal interference superposition, and control the signal generation module to generate the disturbance signal based on the target disturbance signal parameter.

In a possible implementation, that the processor is configured to determine a target disturbance signal parameter when it is detected that the transmission status of the first probing signal satisfies the condition for signal interference superposition is specifically as follows: the processor is configured to: when it is detected that the transmission status of the first probing signal satisfies the condition for signal interference superposition, determine a first device model corresponding to the card reader device; obtain configuration information of the disturbance signal, where the configuration information includes at least one second device model and a disturbance signal parameter corresponding to each second device model; and determine a disturbance signal parameter corresponding to the first device model in the configuration information as the target disturbance signal parameter.

In a possible implementation, the signal processing module includes a rising edge detection circuit. That the signal processing module is configured to detect a probing signal transmitted by a card reader device in a low power card detection mode is specifically as follows: the rising edge detection circuit is configured to determine whether first feature information is detected, where the first feature information is feature information of the probing signal transmitted by the card reader device in the low power card detection mode; when determining that the first feature information is detected, determine that the first probing signal is detected; monitor a rising edge transition event based on a level of the first probing signal; and when the rising edge transition event is monitored, determine that it is detected that the transmission status of the first probing signal satisfies the condition for signal interference superposition.

In a possible implementation, the signal processing module further includes a controller. The controller is configured to determine a target disturbance signal parameter when it is detected that the transmission status of the first probing signal satisfies the condition for signal interference superposition, and control the signal generation module to generate the disturbance signal based on the target disturbance signal parameter.

In a possible implementation, that the controller is configured to determine a target disturbance signal parameter when it is detected that the transmission status of the first probing signal satisfies the condition for signal interference superposition is specifically as follows: the controller is configured to: when it is detected that the transmission status of the first probing signal satisfies the condition for signal interference superposition, determine a first device model corresponding to the card reader device; obtain configuration information of the disturbance signal, where the configuration information includes at least one second device model and a disturbance signal parameter corresponding to each second device model; and determine a disturbance signal parameter corresponding to the first device model in the configuration information as the target disturbance signal parameter.

In a possible implementation, the near field communication device further includes a signal transceiver module and a near field communication chip. The signal transceiver module is configured to transmit the disturbance signal, and the near field communication chip is configured to perform data transmission with the card reader device. The signal transceiver module includes a first antenna and a second antenna, the near field communication chip is connected to the first antenna, the analog-to-digital converter and the signal generation module are separately connected to the second antenna, and the processor is connected between the analog-to-digital converter and the signal generation module; or the signal transceiver module includes a first antenna, the near field communication chip, the analog-to-digital converter, and the signal generation module are separately connected to the first antenna, and the processor is connected between the analog-to-digital converter and the signal generation module.

In a possible implementation, the near field communication device further includes a signal transceiver module and a near field communication chip. The signal transceiver module is configured to transmit the disturbance signal, and the near field communication chip is configured to perform data transmission with the card reader device. The rising edge detection circuit, the signal generation module, and the near field communication chip are separately connected to the signal transceiver module, and the controller is connected between the rising edge detection circuit and the signal generation module.

In a possible implementation, any one or more of the rising edge detection circuit, the controller, and the signal generation module are integrated into the near field communication chip; or the rising edge detection circuit, the controller, and the signal generation module are circuits that are separately independent of the near field communication chip.

In a possible implementation, the target disturbance signal parameter includes a target amplitude, a target phase, target duration, and a target frequency; and the target phase is opposite to a phase of the first probing signal, and the target frequency is the same as a frequency of the first probing signal.

In a possible implementation, the signal processing module is further configured to: when a card reading request signal is not received within predetermined duration after the disturbance signal is transmitted, detect the probing signal transmitted by the card reader device in the low power card detection mode, where the card reading request signal is a signal transmitted by the card reader device in a standard card detection mode; and the signal generation module is further configured to: when a second probing signal is detected, generate and transmit an excitation signal after a transmission periodicity of the second probing signal, so that the card reader device is triggered to exit the low power card detection mode.

According to a third aspect, one or more embodiments of this specification further provide a computer-readable storage medium. The computer-readable storage medium stores computer program instructions, and when the computer program instructions are executed, the near field communication method according to the first aspect is implemented.

In conclusion, to increase a success rate of reading tag information by a mobile phone, one or more embodiments of this specification provide near field communication methods and devices. In the methods, a near field communication device can transmit a disturbance signal when detecting that a card reader device transmits a first probing signal, so that spatial interference superposition can be performed between the disturbance signal and the first probing signal, thereby causing a relatively large signal variation in the first probing signal. As such, the card reader device can detect that a near field communication device exists nearby, so that a success rate of reading tag information is increased.

### BRIEF DESCRIPTION OF DRAWINGS

To describe the technical solutions in one or more embodiments of this specification more clearly, the following briefly describes the accompanying drawings needed for describing the embodiments. Clearly, the accompanying drawings in the following descriptions show merely some of the one or more embodiments of this specification, and a person of ordinary skill in the art can still derive other drawings from these accompanying drawings without creative efforts.
FIG. 1 is a schematic diagram illustrating an application scenario, according to one or more embodiments of this specification;
FIG. 2 is a schematic flowchart illustrating a near field communication method, according to one or more embodiments of this specification;
FIG. 3 is a schematic diagram illustrating a signal transmission process, according to one or more embodiments of this specification;
FIG. 4 is a schematic diagram illustrating another signal transmission process, according to one or more embodiments of this specification;
FIG. 5 is a structural block diagram illustrating a near field communication device, according to one or more embodiments of this specification;
FIG. 6 is a structural block diagram illustrating another near field communication device, according to one or more embodiments of this specification;
FIG. 7 is a structural block diagram illustrating still another near field communication device, according to one or more embodiments of this specification; and
FIG. 8 is a structural block diagram illustrating yet another near field communication device, according to one or more embodiments of this specification.

### DESCRIPTION OF EMBODIMENTS

The following further describes one or more embodiments of this specification in detail by using the accompanying drawings and the embodiments. The features and advantages of the one or more embodiments of this specification will become clear from these descriptions.

The term "example" used here means "used as an example, an embodiment, or an illustration". Any embodiment described here as "example" should not be construed as superior to or better than other embodiments. Although various aspects of the embodiments are shown in the accompanying drawings, the accompanying drawings are not necessarily drawn to scale unless specifically noted.

In addition, the technical features in different implementations of one or more embodiments of this specification described below can be combined with each other provided that they do not conflict with each other.

For ease of understanding, the following first describes an application scenario of the technical solutions provided in one or more embodiments of this specification.

Near field communication (NFC) is a short-distance wireless communication technology, and can implement contactless data transmission between two devices within a short distance, providing a secure and convenient communication method.

NFC can have three working modes:
The first mode is a card reader mode. In the card reader mode, a terminal device, for example, a mobile phone, supporting an NFC function can be used as a card reader device, and the terminal device reads information from media such as a tag, a sticker, a postcard, newspaper, and a business card having an NFC chip, or writes data to the media. In one or more embodiments of this specification, the media can be referred to as NFC tags or NFC devices.

The second mode is a virtual card mode. In the virtual card mode, a terminal device, for example, a mobile phone, supporting an NFC function can be used as an IC card such as a debit card, a credit card, a public transportation card, or an access card. A basic principle thereof is that information in a corresponding IC card is encapsulated into a data packet and stored in the terminal device, for example, the mobile phone, supporting the NFC function.

The third mode is a point-to-point mode. In the point-to-point mode, two terminal devices supporting an NFC function can implement point-to-point data transmission. For example, a mobile phone and a tablet computer supporting the NFC function can implement point-to-point transmission of data such as music and a picture.

The first NFC working mode, namely, a working mode in which the terminal device such as the mobile phone is used as the card reader device, is applicable to application scenarios such as payment, ordering, and information transmission, and the card reader device can be configured to read tag information of the NFC device. For example, in the payment scenario, the card reader device can read payment information of the NFC device. In the ordering scenario, the card reader device can read ordering information of the NFC device.

The following provides descriptions by using, as an example, an application scenario in which a mobile phone performs payment as a card reader device.

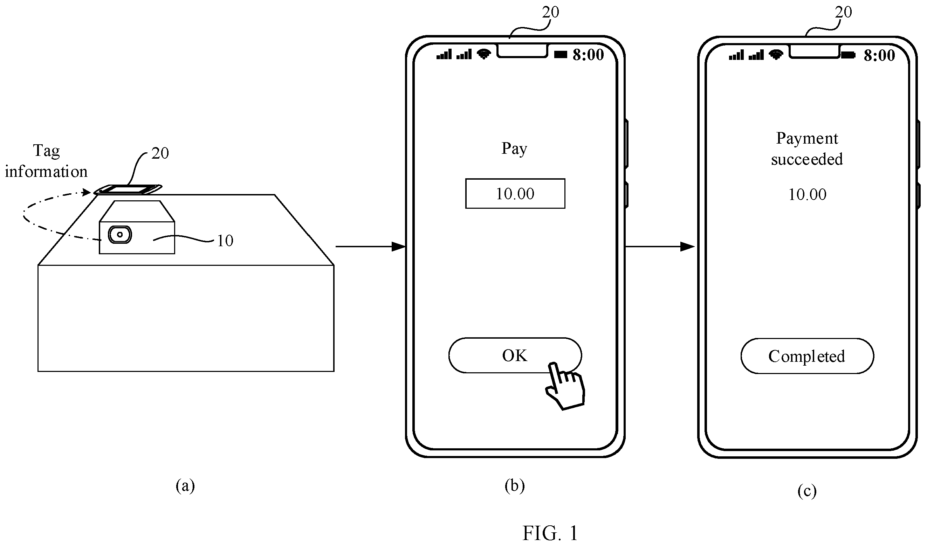

As shown in (a) in FIG. 1, the payment scenario can include an NFC device 10 (which can also be referred to as an NFC tag) and a mobile phone 20. The NFC device 10 can be a collection device, a code tag, or the like. After the mobile phone 20 in a screen-on state or an unlocked state approaches the NFC device 10, the NFC device 10 can sense and communicate with the mobile phone 20 of a user to transfer tag information (for example, payment information). As such, the mobile phone 20 can read the payment information. Then, as shown in (b) in FIG. 1, the mobile phone 20 can display a corresponding payment page based on the payment information. The user performs a payment operation on the mobile phone 20 based on the payment page (for example, the user taps a payment control "OK" displayed on the payment page; or taps a payment control "OK" displayed on the payment page after a payment amount is entered) to complete payment. Then, as shown in (c) in FIG. 1, the mobile phone 20 of the user can display a payment complete page, to complete payment to a merchant by the user. Compared with a code scanning payment method, the above-mentioned payment method can shorten a payment path of the user and improve payment experience of the user.

When a mobile phone is used as a card reader device, power consumption of the mobile phone needs to be considered. To reduce power consumption of the mobile phone and save electricity, tag information of an NFC device can be read in the following way: The mobile phone first uses a low power card detection (LPCD) mode to detect whether an NFC device exists nearby. If the mobile phone detects that an NFC device exists nearby, the mobile phone exits the LPCD mode, and uses a standard card detection mode to read tag information of the NFC device. Power consumed in the LPCD mode is less than that consumed in the standard card detection mode. Therefore, the power consumption of the mobile phone can be reduced by using the LPCD mode.

For example, whether an NFC device exists nearly can be determined in the following way: The mobile phone transmits a probing signal in the LPCD mode. If an NFC device exists nearby, the NFC device causes a change in a probing signal transmitted by the mobile phone. For example, the NFC device consumes energy of a part of the probing signal, so that an amplitude or a phase of the probing signal is reduced. The mobile phone can detect, by using software or hardware, whether a variation in the probing signal exceeds a detection threshold for the variation. If it is detected that the variation in the probing signal exceeds the detection threshold for the variation, the mobile phone confirms that an NFC device exists nearby, and then exits the LPCD mode and switches to the standard card detection mode to read information from the NFC device. If it is detected that the variation in the probing signal does not exceed the detection threshold for the variation, the mobile phone confirms that no NFC device exists nearby, and continues using the LPCD mode to transmit the probing signal.

Although the LPCD mode can reduce the power consumption of the mobile phone, signal strength of the probing signal transmitted in the LPCD mode is relatively weak, and therefore, the variation in the probing signal resulting from the NFC device is relatively small, and the variation in the probing signal may not be able to exceed the detection threshold for the variation. As such, in the LPCD mode, a sensing distance at which the mobile phone reads information from the NFC device is greatly reduced, and sensitivity is reduced. However, variation thresholds corresponding to mobile phones of different models are different, or detection sensitivity of mobile phones of different models to a variation in a probing signal is different. Therefore, in the LPCD mode, a probability that the mobile phone detects a change in the probing signal may be relatively small. Consequently, a card reading success rate of the mobile phone is relatively low, and user experience is seriously affected. For example, some mobile phones may need to transmit a probing signal a plurality of times to successfully read tag information. For another example, some mobile phones may fail to read tag information even after transmitting a probing signal a plurality of times.

To solve the above-mentioned problem that the card reading success rate in the LPCD mode is relatively low when the mobile phone is used as the card reader device, one or more embodiments of this specification provide near field communication methods and devices. In the methods, an NFC device can detect whether a probing signal is received. If the probing signal is detected, the NFC device can synchronously transmit a disturbance signal when the mobile phone transmits the probing signal, so that interference superposition is performed between the disturbance signal and the probing signal, and then the mobile phone is triggered to exit the LPCD mode, thereby increasing the card reading success rate of the mobile phone.

The following describes embodiments of near field communication methods provided in one or more embodiments of this specification by using examples.

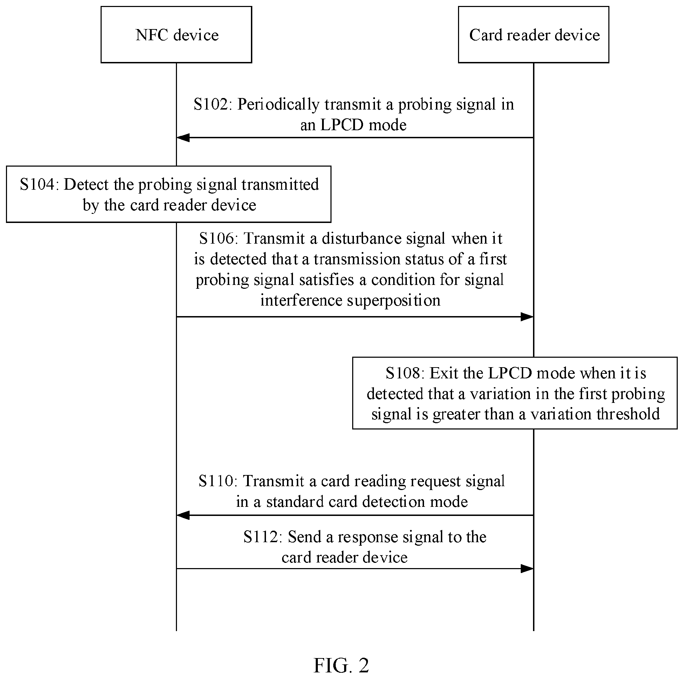

FIG. 2 is a schematic flowchart illustrating a near field communication method, according to one or more embodiments of this specification. The method is applicable to an application scenario in which a terminal device such as a mobile phone is used as a card reader device. As shown in FIG. 2, the method can include the following steps.

Step S102: The card reader device periodically transmits a probing signal in an LPCD mode.

Transmission periodicities of a probing signal, duration of the probing signal, and an amplitude, a phase, and the like of the probing signal can be different for different card reader devices. Implementations are not limited in one or more embodiments of this specification.

Step S104: An NFC device detects the probing signal transmitted by the card reader device.

It is worthwhile to note that in one or more embodiments of this specification, a signal transmitted by the card reader device in the LPCD mode is referred to as the probing signal, and a signal transmitted by the card reader device in a standard card detection mode is referred to as a card reading request signal. The probing signal is different from the card reading request signal. For example, the probing signal and the card reading request signal are different in signal strength, a modulation scheme, and included information. As such, the NFC device can determine whether the detected signal is a probing signal or a card reading request signal based on feature information such as signal strength, a modulation scheme, and included information.

For example, the received signal can be detected as a probing signal in the following way: determining whether the first feature information is detected, where the first feature information is feature information, for example, signal strength, a modulation scheme, and included information, of the probing signal transmitted by the card reader device in the LPCD mode; and when it is determined that the first feature information is detected, determining that the probing signal is detected.

Similarly, the received signal can be detected as a card reading request signal in the following way: determining whether second feature information is detected, where the second feature information is feature information, for example, signal strength, a modulation scheme, and included information, of the card reading request signal transmitted by the card reader device in the standard card detection mode; and when it is determined that the second feature information is detected, determining that the card reading request signal is detected.

When it is determined that the detected signal is a probing signal, it can be further determined whether a transmission status of the detected probing signal (an example in which a first probing signal is detected is used for description below, where the first probing signal can be a probing signal first detected by the NFC device in probing signals transmitted by the card reader device in the LPCD mode) satisfies a condition for signal interference superposition.

The transmission status of the first probing signal can include "Transmission has ended" and "Transmission has not ended". When the transmission status of the first probing signal is "Transmission has ended", spatial interference superposition cannot be performed between a disturbance signal transmitted by the NFC device and the first probing signal. When the transmission status of the first probing signal is "Transmission has not ended", spatial interference superposition can be performed between the disturbance signal transmitted by the NFC device and the first probing signal. Therefore, in one or more embodiments of this specification, the transmission status of the probing signal satisfying the condition for signal interference superposition can be set to the following: The transmission status of the probing signal is "Transmission has not ended". In other words, the condition for signal interference superposition can be satisfied at any moment before transmission of the probing signal ends.

As such, spatial interference superposition can be performed between the disturbance signal and any part of the first probing signal, to change an amplitude and/or a phase of the first probing signal. For example, the disturbance signal can be transmitted at a start stage, an intermediate stage, or a final stage of transmitting the first probing signal.

The probing signal can be a pulse signal, and the pulse signal can be classified into a rising edge stage, a stable high-level stage (which can also be referred to as a flat-top period), and a falling edge stage according to a sequence of transmission times. As such, in one or more embodiments of this specification, it can be determined, based on a level or a waveform of the first probing signal, that it is detected that the first probing signal is at the rising edge stage, the stable high-level stage, or the falling edge stage. Further, the disturbance signal can be synchronously transmitted at the rising edge stage, the stable high-level stage, or the falling edge stage.

In a possible implementation, it can be determined, in the following way, that the transmission status of the first probing signal satisfies the condition for signal interference superposition: after it is detected that the first probing signal is detected, monitoring a rising edge transition event based on the level of the first probing signal; and when the rising edge transition event is monitored, determining that it is detected that the transmission status of the first probing signal satisfies the condition for signal interference superposition.

For example, the NFC device can detect, in a predetermined time window, whether a rising edge transition exists in the level of the first probing signal. If it is detected that the rising edge transition exists in the level of the first probing signal, the NFC device can determine that the rising edge transition event is monitored.

For example, the predetermined time window can be 1 µs. If within the 1 µs, a level corresponding to a latter time point is greater than a level corresponding to a previous time point, and a difference between the two levels is greater than a level threshold, it can be determined that the rising edge transition exists within the 1 µs, and further, it can be determined that the rising edge transition event is monitored.

The first probing signal lasts for a period of time. For example, duration of the first probing signal is 35 µs. As such, after it is determined that the rising edge transition event is monitored, the NFC device can transmit the disturbance signal, so that the disturbance signal and the first probing signal can be transmitted as synchronously as possible, thereby performing spatial interference superposition.

In a possible implementation, it can alternatively be determined, in the following way, that the transmission status of the first probing signal satisfies the condition for signal interference superposition: after determining that the first probing signal is detected, determining, based on a level or a waveform of the first probing signal, whether a flat-top period of the first probing signal is reached; and when it is determined that the flat-top period of the first probing signal is reached, determining that it is detected that the transmission status of the first probing signal satisfies the condition for signal interference superposition.

To enable the card reader device to detect that an NFC tag exists nearby as soon as possible, the NFC device can transmit the disturbance signal immediately after detecting the rising edge transition event, in other words, can transmit the disturbance signal when detecting the rising edge transition event. As such, the first probing signal can be changed as soon as possible by using the disturbance signal. In addition, interference superposition can be performed between the disturbance signal and the first probing signal for enough time, so that a disturbance effect is improved. Generally, after the card reader device transmits the 1^{st} probing signal and before the card reader device transmits the 2^{nd} probing signal, the card reader device can successfully read tag information, for example, payment information, of the NFC device.

Step S106: The NFC device transmits the disturbance signal when detecting that the transmission status of the first probing signal satisfies the condition for signal interference superposition, so that interference superposition is performed between the disturbance signal and the first probing signal, and then the card reader device is triggered to exit the LPCD mode.

The NFC device can transmit the disturbance signal in the following way when the NFC device detects that the transmission status of the first probing signal satisfies the condition for signal interference superposition: The NFC device can first determine a target disturbance signal parameter when detecting that the transmission status of the first probing signal satisfies the condition for signal interference superposition. Then the NFC device can generate the disturbance signal based on the target disturbance signal parameter. Then the NFC device transmits the disturbance signal.

The target disturbance signal parameter can include a target amplitude, a target phase, target duration, a target frequency, and the like that are used to generate the disturbance signal.

Optionally, in one or more embodiments of this specification, the NFC device can configure the same target disturbance signal parameter for different card reader devices. The target disturbance signal parameter can be a disturbance signal parameter with a relatively good disturbance effect that is determined at the research and development test stage.

Optionally, in one or more embodiments of this specification, the NFC device can alternatively configure different target disturbance signal parameters for different card reader devices. In this case, the NFC device can determine the target disturbance signal parameter in the following way: when it is detected that the transmission status of the first probing signal satisfies the condition for signal interference superposition, determining a first device model corresponding to the card reader device; obtaining configuration information of the disturbance signal, where the configuration information includes at least one second device model and a disturbance signal parameter corresponding to each second device model; and determining a disturbance signal parameter corresponding to the first device model in the configuration information as the target disturbance signal parameter.

In other words, disturbance signal parameters such as amplitudes, phases, duration, and frequencies that respectively correspond to different device models can be preconfigured in the NFC device. Then, after the device model corresponding to the current card reader device is determined, target disturbance signal parameters such as a target amplitude, a target phase, target duration, and a target frequency that correspond to the current card reader device can be obtained from the configuration information through matching.

The NFC device can determine the device model corresponding to the current card reader device in the following way: Signal features of probing signals corresponding to different device models can be preconfigured in the NFC device. For example, the signal feature can include at least one of an amplitude, a phase, and duration of the probing signal. As such, the NFC device can determine the device model corresponding to the current card reader device based on the received first probing signal. Then the NFC device can generate and transmit the disturbance signal based on the target disturbance signal parameter corresponding to the device model to which the current card reader device belongs.

As such, matching disturbance signals can be respectively generated for different card reader devices, to better disturb the first probing signal.

The target duration can be the same as the duration of the first probing signal, and the target frequency can be the same as a frequency of the first probing signal. As such, the disturbance signal can be synchronously transmitted when the card reader device continuously transmits the first probing signal, to achieve a better interference effect.

In one or more embodiments of this specification, a specific parameter of the target phase is not limited. For example, the target phase can be opposite to the phase of the first probing signal, or a phase angle between the target phase and the phase of the first probing signal can be greater than or equal to 0° and less than 180°.

When the target phase is opposite to the phase of the first probing signal, the amplitude of the first probing signal can be reduced after an disturbance signal with the opposite phase interferes with the first probing signal. As such, the card reader device can satisfy a condition for exiting the LPCD mode condition can be further included. The condition for exiting the LPCD mode further includes detecting that the amplitude of the first probing signal is reduced.

Step S108: The card reader device exits the low power card detection mode when detecting that a variation in the first probing signal is greater than a variation threshold.

After spatial interference superposition is performed between the disturbance signal and the first probing signal, the first probing signal can change greatly. Therefore, most card reader devices can detect that a signal variation in the interference signal relative to the first probing signal is greater than the variation threshold. For example, an amplitude variation between the interference signal and the first probing signal can be greater than detection sensitivity (or greater than an amplitude variation threshold) of the card reader device for the amplitude variation; and/or a phase variation between the interference signal and the probing signal is greater than detection sensitivity (or greater than a phase variation threshold) of the card reader device for the phase variation.

As such, the card reader device can detect that the first probing signal changes, and determine, based on the change in the first probing signal, that an NFC device exists nearby, thereby exiting the LPCD mode.

Step S110: The card reader device transmits the card reading request signal in the standard card detection mode.

After determining that the NFC device exists nearby, the card reader device can exit the LPCD mode, and use the standard card detection mode to transmit the card reading request signal. The card reading request signal can include request information, to request to read information from the NFC device, request to write information to the NFC device, or the like.

Step S112: The NFC device sends a response signal to the card reader device after sensing the card reading request signal.

The NFC device can send the response signal to the card reader device after sensing the card reading request signal. The response signal can include response information corresponding to the request information. Then, after receiving the response information, the card reader device can perform an interactive operation such as data transmission with the NFC device.

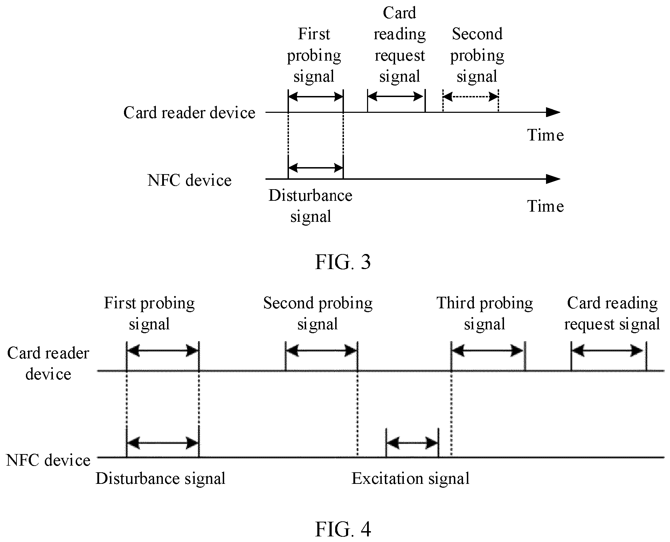

For example, as shown in FIG. 3, in the LPCD mode, the card reader device can transmit a probing signal at intervals of a period of time (in other words, periodically transmit the probing signal), and each probing signal can last for specific duration. In the first transmission periodicity, after the card reader device starts to transmit the first probing signal, the NFC device can detect that the card reader device transmits the first probing signal, and the NFC device can transmit the disturbance signal when detecting that the transmission status of the first probing signal satisfies the condition for signal interference superposition. After the disturbance signal disturbs the first probing signal, the card reader device is triggered to detect a change in the first probing signal, and accordingly, the card reader device exits the LPCD mode and switches to the standard card detection mode to transmit the card reading request signal. As shown in FIG. 3, the card reading request signal can be transmitted before a second probing signal. As such, the card reader device can successfully read the tag information of the NFC device by transmitting a probing signal once.

In conclusion, in one or more embodiments of this specification, the NFC device can transmit the disturbance signal to disturb the first probing signal, so that the signal variation in the first probing signal increases, thereby increasing probabilities that different types of card reader devices detect the change in the first probing signal and increasing card reading success rates of the different types of card reader devices.

In addition, in the solution provided in one or more embodiments of this specification, the disturbance signal is transmitted on the side of the NFC device, so that the signal variation in the probing signal increases, and for the side of the card reader device, logic for determining, by the card reader device, whether an NFC device exists nearby does not change. Therefore, after the card reader device detects the interference signal, a problem such as virtual card popping does not occur.

Virtual card popping means that for a card reader device supporting both a card reader mode and a virtual card mode, when detecting another signal transmitted in a time period other than a time period in which a probing signal is transmitted, the card reader device may consider that another card reader device exists nearby, and may display a corresponding virtual card through popping, so that the another card reader device reads information. It should be understood that in the solution provided in one or more embodiments of this specification, the disturbance signal is synchronously transmitted during transmission of the probing signal to disturb the probing signal, and no independent signal is sent to the card reader device in the time period other than the time period in which the probing signal is transmitted. Therefore, the card reader device displays no virtual card through popping.

The inventor finds that after the disturbance signal is transmitted, there may still be individual cases in which the card reader device fails to successfully read the tag information of the NFC device. For example, for a card reader device whose detection sensitivity to the variation in the first probing signal is relatively low, a card reading success rate thereof is still relatively low.

For the above-mentioned case, the card reading success rate of the card reader device can be further increased in the following way:
when the card reading request signal is not received within predetermined duration after the disturbance signal is transmitted, detecting again the probing signal transmitted by the card reader device in the LPCD mode; and when the second probing signal is detected, transmitting an excitation signal after a transmission periodicity of the second probing signal, so that the card reader device is triggered to exit the LPCD mode.

For example, as shown in FIG. 4, in the first transmission periodicity in the LPCD mode, after the card reader device starts to transmit the first probing signal, the NFC device can detect the rising edge event of the first probing signal, and synchronously transmit the disturbance signal. However, after the disturbance signal disturbs the first probing signal, the card reader device is not triggered to detect that the first probing signal changes. Therefore, the NFC device does not receive the card reading request signal within the predetermined duration after the disturbance signal is transmitted. In this case, the NFC device can detect the probing signal, and when the second probing signal is detected, the NFC device transmits the excitation signal after the second probing signal and a third probing signal.

As shown in FIG. 4, transmission of the excitation signal and transmission of the second probing signal are staggered and do not overlap each other, in other words, the excitation signal does not affect the transmitted second probing signal. After receiving the excitation signal, the card reader device may preliminarily consider that the excitation signal is a signal transmitted by another card reader device and used to excite the current card reader device, to read tag information from the current card reader device. In other words, in this case, the card reader device may consider that the excitation signal is used to indicate that another card reader device exists nearby, and the card reader device may be requested to serve as a virtual card. Based on this, the card reader device can further determine whether the excitation signal is used to indicate that another card reader device exists nearby or is used to indicate that an NFC device exists nearby. When the card reader device determines that the excitation signal is used to indicate that an NFC device exists nearby, the card reader device can exit the LPCD mode, and transmit the card reading request signal. Because it takes some time for the card reader device to determine that the excitation signal is used to indicate that an NFC device exists nearby, as shown in FIG. 4, the card reader device may transmit the card reading request signal after transmitting the third probing signal.

It is worthwhile to note that a specific parameter of the excitation signal is not limited in one or more embodiments of this specification. For example, the excitation signal can be an empty carrier signal. As such, the card reader device can determine, depending on whether the excitation signal is an empty carrier signal, whether the excitation signal is used to indicate that another card reader device exists nearby or is used to indicate that an NFC device exists nearby.

It is worthwhile to further note that the second probing signal can be any probing signal after the first probing signal. Implementations are not limited in one or more embodiments of this specification.

As such, when the disturbance signal fails to successfully disturb the first probing signal, the excitation signal can be further used to enable the card reader device to exit the LPCD mode, so that a card reading success rate of the card reader device is increased.

It can be understood that the above-mentioned embodiments are merely examples, and variations can be made to the above-mentioned embodiments in actual implementation. A person skilled in the art can understand that all variations to the above-mentioned embodiments that are made without creative efforts fall within the protection scope of one or more embodiments of this specification. Details are omitted for simplicity in the embodiments.

Based on the same inventive concept, one or more embodiments of this specification further provide an NFC device. Because a principle of solving a problem by the NFC device is similar to that in the above-mentioned NFC method, for implementation of the NFC device, references can be made to implementation of the above-mentioned NFC method. Details are omitted for simplicity.

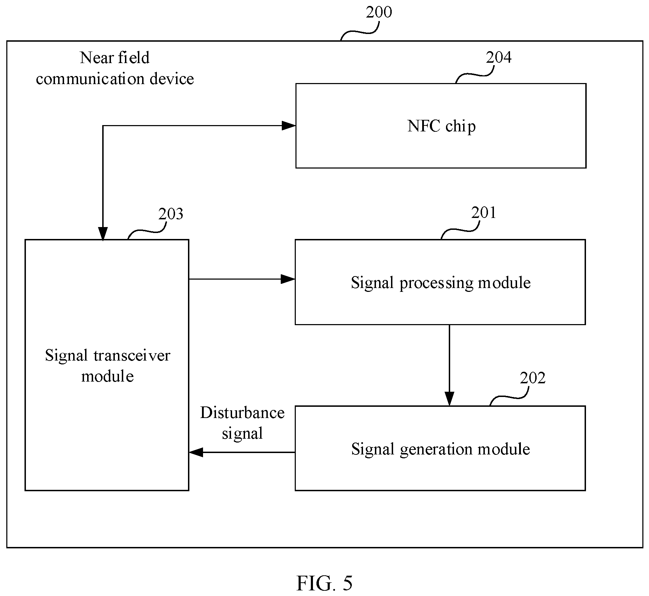

FIG. 5 is a structural block diagram illustrating an NFC device, according to one or more embodiments of this specification. As shown in FIG. 5, the NFC device 200 can include a signal processing module 201 and a signal generation module 202, where
the signal processing module 201 is configured to detect a probing signal transmitted by a card reader device in a low power card detection mode; and
the signal generation module 202 is configured to generate and transmit a disturbance signal when it is detected that a transmission status of a first probing signal satisfies a condition for signal interference superposition, so that interference superposition is performed between the disturbance signal and the first probing signal, and then the card reader device is triggered to exit the low power card detection mode, where the first probing signal is a probing signal first detected by the near field communication device in probing signals transmitted by the card reader device in the low power card detection mode.

In a possible implementation, the signal processing module 201 can be further configured to: when a card reading request signal is not received within predetermined duration after the disturbance signal is transmitted, detect the probing signal transmitted by the card reader device in the low power card detection mode, where the card reading request signal is a signal transmitted by the card reader device in a standard card detection mode; and the signal generation module 202 can be further configured to: when a second probing signal is detected, generate and transmit an excitation signal after a transmission periodicity of the second probing signal, so that the card reader device is triggered to exit the low power card detection mode.

As shown in FIG. 5, the NFC device 200 can further include a signal transceiver module 203 and an NFC chip 204. The signal processing module 201, the signal generation module 202, and the NFC chip 204 can all be connected to the signal transceiver module 203, and the signal generation module 202 can be connected between the signal processing module 201 and the signal transceiver module 203. The signal generation module 202 can be configured to generate a disturbance signal, and transmit the disturbance signal through the signal transceiver module 203. The NFC chip 204 can be configured to perform data transmission with the card reader device.

The signal processing module 201 can be implemented by using a combination of software and hardware, or can be implemented by using hardware only. Implementations are not limited in one or more embodiments of this specification.

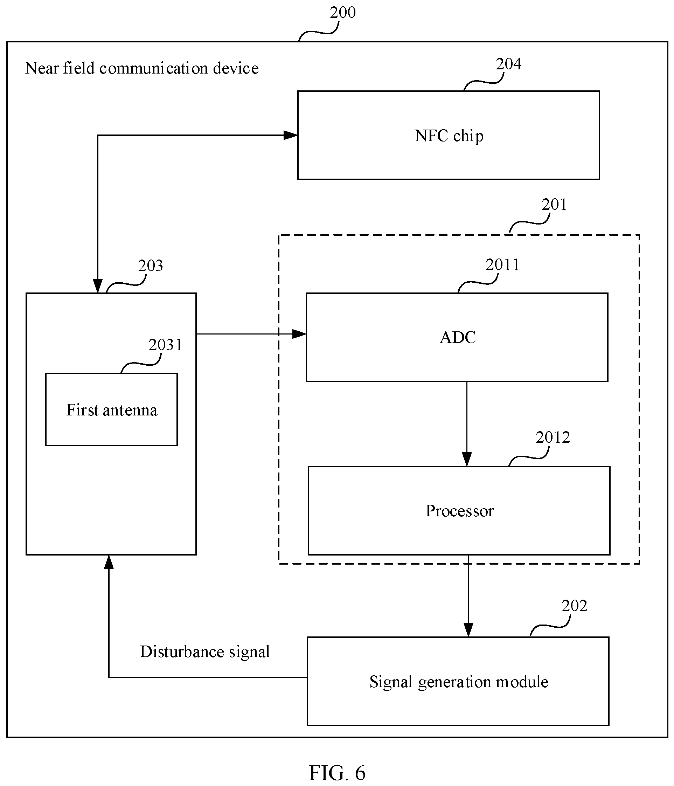

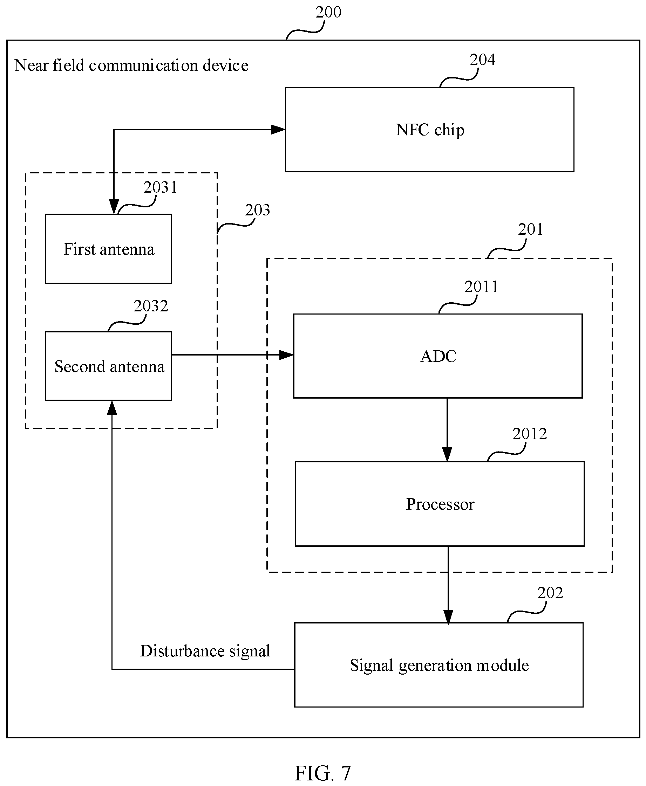

The following describes, with reference to FIG. 6 and FIG. 7 and by using examples, the signal processing module 201 provided in one or more embodiments of this specification and implemented by using a combination of software and hardware.

For example, as shown in FIG. 6, the signal processing module 201 can include an analog-to-digital converter (ADC) 2011 and a processor 2012. The signal transceiver module 203 can be separately connected to the ADC 2011 and the signal generation module 202, and the processor 2012 can be connected between the ADC 2011 and the signal generation module 202.

The ADC 2011 can be configured to convert an electromagnetic field signal received through the signal transceiver module 203 into a digital signal, and output the digital signal to the processor.

The processor 2012 can be configured to determine, based on the digital signal, whether first feature information is detected, where the first feature information is feature information of the probing signal transmitted by the card reader device in the low power card detection mode; when determining that the first feature information is detected, determine that the first probing signal is detected; monitor a rising edge transition event based on a level of the first probing signal; and when the rising edge transition event is monitored, determine that it is detected that the transmission status of the first probing signal satisfies the condition for signal interference superposition.

The processor 2012 can be any device having a signal processing capability. For example, the processor can be a micro controller unit (MCU). After receiving the digital signal, the processor can process the digital signal by using software.

In a possible implementation, the processor 2012 can be further configured to determine a target disturbance signal parameter when it is detected that the transmission status of the first probing signal satisfies the condition for signal interference superposition, and control the signal generation module to generate the disturbance signal based on the target disturbance signal parameter.

In a possible implementation, the processor 2012 can be configured to: when it is detected that the transmission status of the first probing signal satisfies the condition for signal interference superposition, determine a first device model corresponding to the card reader device; obtain configuration information of the disturbance signal, where the configuration information includes at least one second device model and a disturbance signal parameter corresponding to each second device model; and determine a disturbance signal parameter corresponding to the first device model in the configuration information as the target disturbance signal parameter.

In a possible implementation, the target disturbance signal parameter can include a target amplitude, a target phase, target duration, and a target frequency; and the target phase is opposite to a phase of the first probing signal, and the target frequency is the same as a frequency of the first probing signal.

The signal generation module 202 can be of a hardware structure used to generate a disturbance signal. For example, the signal generation module 202 can be an active crystal oscillator, an RC oscillator circuit, or the like. Implementations are not limited in one or more embodiments of this specification. Specifically, after receiving a control command sent by the processor 2012, the signal generation module 202 can generate the disturbance signal based on the target disturbance signal parameter in the control command.

Referring back to FIG. 6, the signal transceiver module 203 can include a first antenna 2031, and the ADC 2011, the signal generation module 202, and the NFC chip 204 can all be connected to the first antenna 2031. In this case, the first antenna 2031 can be time-division multiplexed. For example, before the card reading request signal is received, the first antenna 2031 can be used by the ADC 2011 and the signal generation module 202 to receive/transmit a signal. After the card reading request signal is received, the first antenna 2031 can be used by the NFC chip 204 to receive/transmit a signal.

As shown in FIG. 7, the signal transceiver module 203 can alternatively include a first antenna 2031 and a second antenna 2032. The NFC chip 204 can be connected to the first antenna 2031, and both the ADC 2011 and the signal generation module 202 are connected to the second antenna 2032.

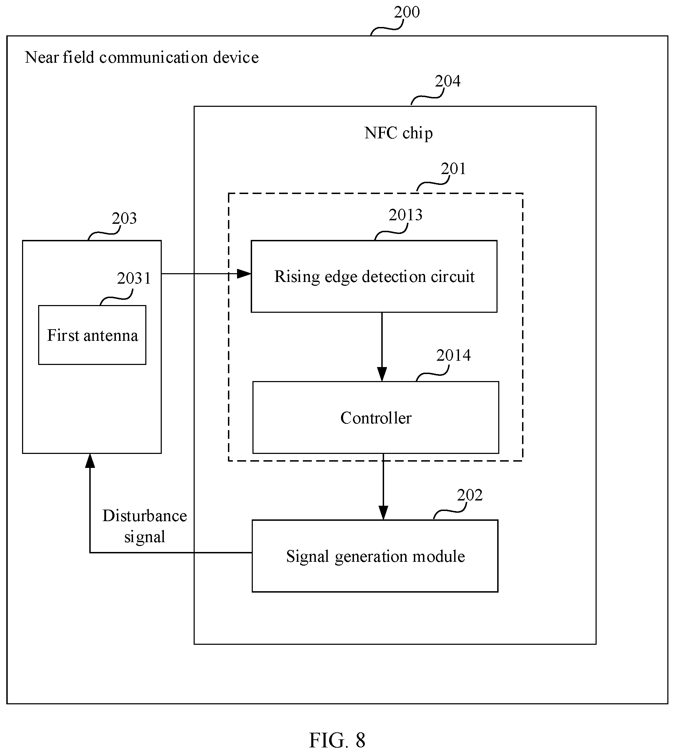

The following describes, with reference to FIG. 8 and by using examples, the signal processing module 201 provided in one or more embodiments of this specification and implemented by using hardware only.

As shown in FIG. 8, the signal processing module 201 can include a rising edge detection circuit 2013 and a controller 2014. The rising edge detection circuit 2013 and the signal generation module 202 can be separately connected to the signal transceiver module 203, and the controller 2014 can be connected between the rising edge detection circuit 2013 and the signal generation module 202.

In a possible implementation, any one or more of the rising edge detection circuit 2013, the controller 2014, and the signal generation module 202 can be integrated into the NFC chip 204; or
the rising edge detection circuit 2013, the controller 2014, and the signal generation module 202 can be separately independent of the NFC chip 204, where
the rising edge detection circuit 2013 can be configured to determine whether first feature information is detected, where the first feature information is feature information of the probing signal transmitted by the card reader device in the low power card detection mode; when determining that the first feature information is detected, determine that the first probing signal is detected; monitor a rising edge transition event based on a level of the first probing signal; and when the rising edge transition event is monitored, determine that it is detected that the transmission status of the first probing signal satisfies the condition for signal interference superposition.

The controller 2014 can be configured to determine a target disturbance signal parameter when it is detected that the transmission status of the first probing signal satisfies the condition for signal interference superposition, and control the signal generation module to generate the disturbance signal based on the target disturbance signal parameter.

In a possible implementation, the controller 2014 can be configured to: when it is detected that the transmission status of the first probing signal satisfies the condition for signal interference superposition, determine a first device model corresponding to the card reader device; obtain configuration information of the disturbance signal, where the configuration information includes at least one second device model and a disturbance signal parameter corresponding to each second device model; and determine a disturbance signal parameter corresponding to the first device model in the configuration information as the target disturbance signal parameter.

In a possible implementation, the controller 2014 can configure the same target disturbance signal parameter for different card reader devices. As such, complexity of circuit design of the controller 2014 can be reduced.

It is worthwhile to note that a function principle of each component in the NFC device 200 is the same as an implementation principle of a corresponding step in the above-mentioned near field communication method. For details, references can be made to descriptions of a corresponding part in the above-mentioned method embodiments. Details are omitted here for simplicity.

It is worthwhile to note that the components shown in FIG. 5 to FIG. 8 are examples, and another type of structure can be used to supplement or replace the structure to implement a telecommunication function or another function. In addition, the NFC device 200 can further include components not shown in FIG. 5 to FIG. 8. For details, references can be made to the conventional technology.

In some optional implementations, the NFC device 200 can further include a memory, a communication module, an input unit, an audio processor, a display, a power supply, and another component.

The memory can be coupled to the signal processing module 201, and the memory can be one or more of a buffer, a flash memory, a hard drive, a removable medium, a volatile memory, a non-volatile memory, or another suitable apparatus. The above-mentioned program of information about the execution of the near field communication method can be stored. In addition, the signal processing module 201 can execute the program stored in the memory, to implement information storage, processing, or the like.

The memory can be a solid-state memory, for example, a read-only memory (ROM), a random access memory (RAM), or a SIM card. The memory can alternatively be a memory that stores information even when powered off and can be selectively erased and provided with more data. An example of the memory is sometimes referred to as an EPROM or the like. The memory can alternatively be another type of apparatus. The memory includes a buffer memory (sometimes referred to as a buffer). The memory can include an application/function storage portion. The application/function storage portion is configured to store an application program and a function program or a program for performing an operation of the NFC device 200 by using the signal processing module 201.

The memory can further include a data storage portion, and the data storage portion is configured to store data, for example, a contact, digital data, a picture, a sound, and/or any other data used by a payment device. A driver storage portion of the memory can include various drivers of a computer device that are used for a communication function and/or another function (for example, a messaging application or an address book application) of the computer device.

The input unit can provide input to the signal processing module 201. The input unit is, for example, a key or a touch input apparatus. The power supply can be configured to provide power to the NFC device 200. The display can be configured to display a display object such as an image and a text. The display can be, for example, an LCD display, but is not limited thereto.

The communication module is a transmitter/receiver sending and receiving a signal through an antenna. The communication module (the transmitter/receiver) is coupled to the signal processing module 201 to provide an input signal and receive an output signal, which can be the same as that in the case of a conventional mobile communication terminal.

Based on different communication technologies, a plurality of communication modules such as a cellular network module, a Bluetooth module, and/or a wireless local area network module can be disposed in the same computer device. The communication module (the transmitter/receiver) is further coupled to a speaker and a microphone through an audio processor, to provide audio output through the speaker and receive audio input from the microphone, thereby implementing a common telecommunication function. The audio processor can include any suitable buffer, decoder, amplifier, and the like. In addition, the audio processor is further coupled to the signal processing module 201, so that recording can be performed on the current device by using the microphone, and sound stored on the current device can be played by using the speaker.

One or more embodiments of this specification further provide a computer-readable storage medium that can implement all steps in the near field communication method in the above-mentioned embodiments. The computer-readable storage medium stores a computer program. When the computer program is executed by a processor, all the steps in the near field communication method in the above-mentioned embodiments are implemented.

Although one or more embodiments of this specification provide method operation steps as in the embodiments or the flowcharts, more or fewer operation steps can be included based on routine or non-creative efforts. The step sequence enumerated in the embodiments is only one of various step execution sequences, and does not represent a unique execution sequence. In practice, during execution of an apparatus or client product, the steps can be performed according to the method sequence shown in the embodiments or the accompanying drawings, or can be performed in parallel (for example, in an environment of a parallel processor or multi-threaded processing).

A person skilled in the art should understand that the embodiments of this specification can be provided as a method, a device, or a computer program product. Therefore, the embodiments of this specification can use a form of hardware only embodiments, software only embodiments, or embodiments with a combination of software and hardware. In addition, one or more embodiments of this specification can use a form of a computer program product that is implemented on one or more computer-usable storage media (including but not limited to a disk storage, a CD-ROM, an optical storage, etc.) that include computer-usable program code.

One or more embodiments of this specification are described with reference to the flowcharts and/or block diagrams of the method, the apparatus (system), and the computer program product according to the one or more embodiments of this specification. It should be understood that computer program instructions can be used to implement each procedure and/or each block in the flowcharts and/or the block diagrams and a combination of a procedure and/or a block in the flowcharts and/or the block diagrams. These computer program instructions can be provided for a general-purpose computer, a dedicated computer, an embedded processor, or a processor of another programmable data processing device to generate a machine, so the instructions executed by the computer or the processor of the another programmable data processing device generate an apparatus for implementing a specific function in one or more procedures in the flowcharts and/or in one or more blocks in the block diagrams.

These computer program instructions can be stored in a computer-readable memory that can instruct the computer or the another programmable data processing device to work in a specific way, so that the instructions stored in the computer-readable memory generate an artifact that includes an instruction apparatus. The instruction apparatus implements a specific function in one or more procedures in the flowcharts and/or in one or more blocks in the block diagrams.

These computer program instructions can be loaded onto the computer or the another programmable data processing device, so that a series of operations and steps are performed on the computer or the another programmable device, thereby generating computer-implemented processing. Therefore, the instructions executed on the computer or the another programmable device provide steps for implementing a specific function in one or more procedures in the flowcharts and/or in one or more blocks in the block diagrams.

The embodiments in this specification are described in a progressive way. For same or similar parts of the embodiments, mutual references can be made. Each embodiment focuses on a difference from other embodiments. Particularly, the apparatus and system embodiments are briefly described because they are basically similar to the method embodiments. For related parts, references can be made to the descriptions in the method embodiments.

Relational terms such as first and second in this specification are merely used to distinguish one entity or operation from another entity or operation without necessarily needing or implying any such actual relationship or sequence between these entities or operations. In addition, the term "include", "comprise", or any other variant thereof is intended to cover a non-exclusive inclusion, so that a process, a method, an article, or a device that includes a series of elements not only includes those elements, but also includes other elements not expressly listed, or further includes elements inherent to such a process, method, article, or device. A person of ordinary skill in the art can understand a specific meaning of the above-mentioned term in one or more embodiments of this specification based on specific conditions.

It is worthwhile to note that one or more embodiments of this specification and features in the embodiments can be combined with each other when there are no conflicts. One or more embodiments of this specification are not limited to any single aspect, are not limited to any single embodiment, and are not limited to any combination and/or permutation of these aspects and/or embodiments. Furthermore, each aspect and/or embodiment of one or more embodiments of this specification can be used alone or in combination with one or more other aspects and/or embodiments thereof.

Finally, it should be noted that the above-mentioned embodiments are merely used to describe the technical solutions of one or more embodiments of this specification, but are not intended to limit the technical solutions. Although the one or more embodiments of this specification are described in detail with reference to the above-mentioned embodiments, persons of ordinary skill in the art should understand that they can make modifications to the technical solutions described in the above-mentioned embodiments, or perform equivalent replacement on some or all of the technical features. However, these modifications or replacements do not make the essence of the corresponding technical solutions depart from the scope of the technical solutions of the one or more embodiments of this specification, and should fall within the scope of the one or more embodiments of this specification.

One or more embodiments of this specification are described above with reference to optional implementations. However, the embodiments are merely examples, and are intended for illustration only. Based on this, a plurality of replacements and improvements can be made to the one or more embodiments of this specification, and fall within the protection scope of the one or more embodiments of this specification.

## Claims

1. A near field communication method, applied to a near field communication device, wherein the method comprises:
detecting a probing signal transmitted by a card reader device in a low power card detection mode; and
transmitting a disturbance signal when it is detected that a transmission status of a first probing signal satisfies a condition for signal interference superposition, so that interference superposition is performed between the disturbance signal and the first probing signal, and then the card reader device is triggered to exit the low power card detection mode, wherein the first probing signal is a probing signal first detected by the near field communication device in probing signals transmitted by the card reader device in the low power card detection mode.

2. The method according to claim 1, wherein detecting the probing signal transmitted by the card reader device in the low power card detection mode comprises:
determining whether first feature information is detected, wherein the first feature information is feature information of the probing signal transmitted by the card reader device in the low power card detection mode;
when it is determined that the first feature information is detected, determining that the first probing signal is detected;
monitoring a rising edge transition event based on a level of the first probing signal; and
when the rising edge transition event is monitored, determining that it is detected that the transmission status of the first probing signal satisfies the condition for signal interference superposition.

3. The method according to claim 1 or 2, wherein transmitting the disturbance signal when it is detected thatthe transmission status of the first probing signal satisfies the condition for signal interference superposition comprises:
determining a target disturbance signal parameter when it is detected that the transmission status of the first probing signal satisfies the condition for signal interference superposition;
generating the disturbance signal based on the target disturbance signal parameter; and
transmitting the disturbance signal.

4. The method according to claim 3, wherein determining the target disturbance signal parameter when it is detected that the transmission status of the first probing signal satisfies the condition for signal interference superposition comprises:
when it is detected that the transmission status of the first probing signal satisfies the condition for signal interference superposition, determining a first device model corresponding to the card reader device;
obtaining configuration information of the disturbance signal, wherein the configuration information comprises at least one second device model and a disturbance signal parameter corresponding to each second device model; and
determining a disturbance signal parameter corresponding to the first device model in the configuration information as the target disturbance signal parameter.

5. The method according to claim 3, wherein the target disturbance signal parameter comprises a target amplitude, a target phase, target duration, and a target frequency; and the target phase is opposite to a phase of the first probing signal, and the target frequency is the same as a frequency of the first probing signal.

6. The method according to claim 1, wherein an amplitude variation between the first probing signal and an interference signal obtained after interference superposition is performed between the disturbance signal and the first probing signal is greater than a detection threshold of the card reader device for the amplitude variation; and/or a phase variation between the interference signal and the first probing signal is greater than a detection threshold of the card reader device for the phase variation.

7. The method according to claim 1, wherein the method further comprises:
when a card reading request signal is not received within predetermined duration after the disturbance signal is transmitted, detecting the probing signal transmitted by the card reader device in the low power card detection mode, wherein the card reading request signal is a signal transmitted by the card reader device in a standard card detection mode; and
when a second probing signal is detected, transmitting an excitation signal after a transmission periodicity of the second probing signal, so that the card reader device is triggered to exit the low power card detection mode.

8. The method according to claim 7, wherein the method further comprises:
determining, within the predetermined duration after the disturbance signal is transmitted, whether second feature information is detected, wherein the second feature information is feature information of the card reading request signal transmitted by the card reader device in the standard card detection mode; and
when it is determined that the second feature information is not detected, determining that the card reading request signal is not received.

9. A computer-readable storage medium, wherein the computer-readable storage medium stores computer program instructions, and when the computer program instructions are executed, the method according to any one of claims 1 to 8 is implemented.

10. A computing device, comprising a memory and a processor, wherein the memory stores executable code, and when the processor executes the executable code, the computing device is caused to implement the method of any one of claims 1 to 8.

11. A computer program comprising computer executable instructions which when executed by a processor cause the processor to implement the method of any one of claims 1 to 8.

12. An apparatus comprising means for performing the steps of the method of any one of claims 1 to 8.
